# FASCICULE DE BREVET EUROPEEN

(11) **EP 0 479 659 B1**
(45) Date de publication et mention de la délivrance du brevet: **07.12.1994**
(21) Numéro de dépôt: 91402601.8
(22) Date de dépôt: 30.09.1991
(51) Int. Cl.: B60S 1/34

(54) **Bras d'essuie-glace notamment pour véhicule automobile**
Scheibenwischerarm besonders für Kraftfahrzeuge
Windscreen wiper arm in particular for vehicles

(30) Priorité: 03.10.1990 FR 9012170
(43) Date de publication de la demande: 08.04.1992
(73) Titulaire: VALEO SYSTEMES D'ESSUYAGE, 78180 Montigny-Le-Bretonneux (FR)
(72) Inventeur: Schon, Wilfrid, F-63580 Saint-Etienne-sur-Usson (FR)
(74) Mandataire: Gamonal, Didier

(56) Documents cités:
- DE-A- 2 346 292
- DE-A- 3 427 199
- FR-A- 2 103 349
- GB-A- 2 188 537

## Description

La présente invention a pour objet un essuie-glace, destiné en particulier, mais non exclusivement, aux véhicules automobiles.

On sait, que pour l'essuyage des surfaces vitrées on utilise, afin de maintenir une bonne visibilité à travers lesdites surfaces vitrées, des essuie-glaces à mouvement alternatif qui frottent les surfaces à balayer au moyen d'un ou plusieurs balais d'essuie-glace.

Le balai d'essuie-glace est généralement entraîné, par l'intermédiaire d'une articulation appropriée, par un bras d'essuie-glace lui-même entraîné dans un mouvement rotatif alternatif par un arbre de sortie d'un mécanisme d'entraînement porté par la carrosserie du véhicule.

Dans les bras d'essuie-glace connus, la liaison entre l'arbre de sortie du mécanisme d'entraînement et le bras d'essuie-glace est constituée par une tête d'entraînement faisant partie du bras d'essuie-glace et venant se fixer sur l'arbre de sortie précité généralement au moyen d'un écrou.

Une articulation formant axe de pivotement, généralement constituée par un rivet, est ménagée entre la tête d'entraînement et le carter que présente le bras au niveau de la tête d'entraînement et un ressort est interposé entre le carter, d'une part, et la tête, d'autre part, afin d'appliquer, au cours du fonctionnement, le bras d'essuie-glace et son balai avec une bonne pression contre la surface vitrée à balayer, le carter ayant généralement une section transversale en forme de U et renfermant entre ses ailes le ressort précité qui peut travailler selon les réalisations soit en compression, soi en traction.

Un bras d'essuie-glace est une pièce qu'il importe de pouvoir remplacer aisément. Pour ce faire, il est actuellement nécessaire d'écarter le balai de la vitre par pivotement autour de l'articulation de pivotement et, après dégagement d'un capuchon de protection, de dévisser l'écrou de fixation de la tête d'entraînement sur l'arbre d'entraînement afin de remplacer le bras.

Cet ensemble d'opérations nécessite un outil, tel qu'une clé de desserrage de l'écrou qui n'est pas toujours disponible.

Il a déjà été proposé dans le document FR-A-2 103 349 un bras d'essuie-glace disposé sur un arbre d'entraînement dans lequel ledit bras est dépourvu de tête d'entraînement et présente uniquement un axe de pivotement venant s'insérer dans une rainure prévue dans l'arbre d'entraînement, le maintien du bras sur l'arbre étant assuré par un organe élastique en forme de bande.

Ce montage nécessite de prévoir un logement usiné dans l'arbre d'entraînement et une indexation de cet arbre par rapport à la surface à essuyer pour permettre de positionner convenablement l'angle de balayage procuré par cet arbre au bras d'essuie-glace et cela par rapport à ladite surface.

En outre, un tel montage présente aussi l'inconvénient de ne pas maintenir le bras en position complètement écartée de la surface à essuyer compte tenu du fait que, dans cette position, l'organe élastique n'appuie plus sur l'arbre et l'axe de pivotement peut quitter, de par le propre poids du bras, le logement dans lequel il est situé.

La présente invention a pour objet de pallier ces inconvénients et de permettre le montage, la fixation et le démontage d'un balai d'essuie-glace par un simple encliquetage.

Selon la présente invention, un essuie-glace, notamment pour véhicule automobile, comprenant un bras d'essuie-glace et une tête d'entraînement, ledit bras comportant un carter de section en forme de U inversé portant un axe de pivotement, ledit axe de pivotement étant apte à coopérer avec un logement porté par la tête d'entraînement entraînée en rotation alternative autour d'un axe que présente un alésage porté par ladite tête, ledit logement étant incliné par rapport à l'axe de l'alésage ainsi qu'un organe élastique dont l'une des extrémités appuie sur le carter et dont l'autre des extrémités agit sur la tête d'entraînement par l'intermédiaire d'une extrémité d'une tige de support de l'organe élastique de manière à créer un couple tendant à faire pivoter le bras d'essuie-glace en direction d'une surface à essuyer (Essuie-glace du type divulgué, par exemple, par FR-A-2 103 349, est caractérisé en ce que la tête d'entraînement présente une rainure inclinée par rapport à l'axe de l'alésage à l'intérieur de laquelle coulisse l'extrémité de la tige de support entre une position dite de verrouillage, lorsque le bras d'essuie-glace est appliqué en direction de la surface vitrée et une position dite de déverrouillage, lorsque le bras d'essuie-glace est écarté de ladite surface vitrée.

Il est ainsi possible d'une part de démonter et de remplacer très aisément un bras d'essuie-glace sans avoir recours à un quelconque outil, en laissant la tête d'entraînement fixée sur l'arbre de sortie, et d'autre part, l'arbre de sortie reste intact et peut ainsi recevoir différents types de bras d'essuie-glace.

Divers modes de réalisation sont précisés dans les revendications 2 à 10 dépendantes.

D'autres caractéristiques et avantages de l'invention apparaîtront au cours de la description qui va suivre d'un mode particulier de réalisation, donné uniquement à titre d'exemple non limitatif, en regard des dessins annexés sur lesquels :
- la figure 1 est une vue schématique en coupe montrant le bras d'essuie-glace en position de service ;
- la figure 2 est une vue en coupe selon la ligne AA de la figure 1 ;
- la figure 3 est une vue schématique en coupe montrant le bras d'essuie-glace en position intermédiaire ;
- la figure 4 est une vue schématique en coupe montrant le bras d'essuie-glace en position de montage/démontage.

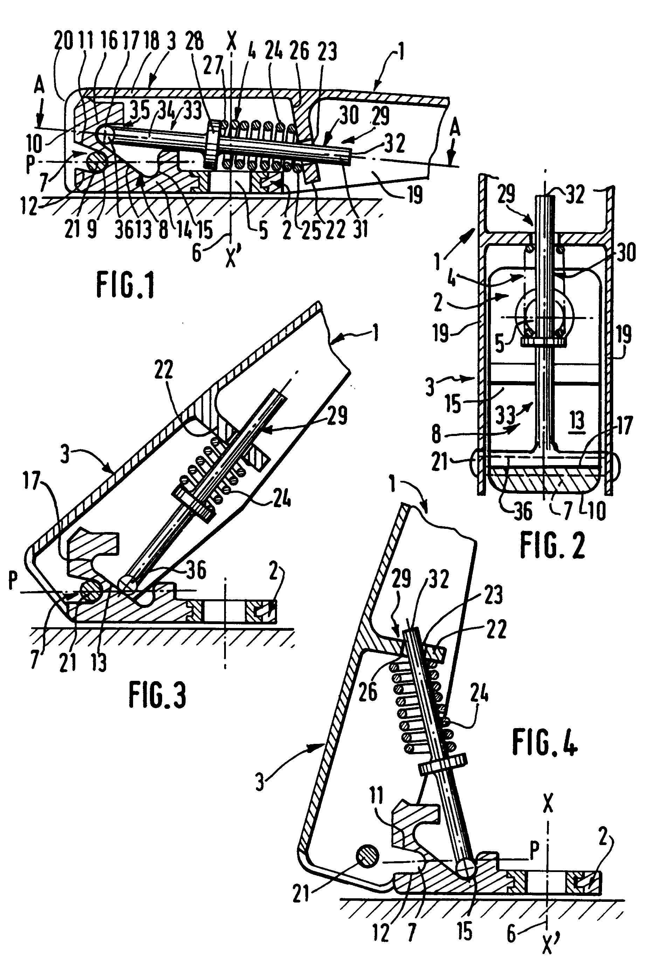

Sur les figures 1 et 2, on distingue un bras d'essuie-glace 1 comportant une tête d'entraînement 2, un carter 3 et un organe élastique 4.

La tête d'entraînement 2 présente un alésage 5 permettant de la relier mécaniquement à un arbre d'entraînement 6, symbolisé sur la figure par trait d'axe XX′, un logement transversal 7 situé à distance de l'alésage 5 et de direction orthogonale à l'axe XX′ ainsi qu'une rainure inclinée 8, située entre l'axe XX′ et le logement transversal 7 et inclinée par rapport audit axe XX′.

Le logement transversal 7 présente une paroi de fond 9 de forme semi-cylindrique se poursuivant en direction de l'une 10 des extrémités de la tête 2, celle de gauche sur la figure 1, par des surfaces inclinées 11, 12 s'écartant légèrement l'une de l'autre et de direction non orthogonale à l'axe XX′ en formant un angle aigu avec celui-ci de manière à constituer une rainure ouverte à l'extrémité 10 de la tête d'entraînement 2.

La rainure inclinée 8, de direction sensiblement identique à celle du logement 7 se compose d'une surface plane inclinée 13 , présentant également un angle aigu d'inclinaison par rapport à l'axe XX′, et se termine à l'une de ses extrémités longitudinale 14 par une première paroi 15 de fond de forme semi-cylindrique et cela du côté de l'alésage 5 en se situant en dessous d'un plan P horizontal passant par l'axe longitudinal de la paroi semi-cylindrique 9 du logement 7 et, à l'autre 16 de ses extrémités, par une deuxième paroi de fond 17 de forme également semi-cylindrique et parallèle à la première, cette deuxième paroi de fond se situant au-dessus du plan P précédemment défini.

Le carter 3 présente, en section, une forme générale de U inversé venant recouvrir la tête d'entraînement 2 et se compose d'une âme centrale 18 se poursuivant orthogonalement par des branches 19 disposées de part et d'autre de la tête d'entraînement en étant dirigée vers ladite tête.

L'une 20 des extrémités du carter, celle située sur la gauche de la figure 1, porte un axe de pivotement 21, de forme sensiblement cylindrique correspondant à la forme de la paroi de fond 9 du logement transversal 7 et en étant disposé dans la même direction que celle-ci.

A distance de l'axe 21, et cela dans un sens opposé à l'extrémité 20, est prévue une paroi 22, dite paroi d'appui, disposée sensiblement orthogonale à l'âme 18 du carter et aux branches 19, cette paroi d'appui présentant une ouverture circulaire 23 dont le rôle sera explicité par la suite.

Bien entendu, et cela de manière connue en soi, le carter 3 se prolonge par l'autre de ses extrémités de manière à porter par une articulation un balai d'essuie-glace.

Entre la tête d'entraînement 2 et le carter 3, est prévu un organe élastique 4 composé ici d'un ressort de compression 24 dont l'une des extrémités 25 s'appuie sur la surface externe 26, celle dirigée vers la tête d'entraînement, de la paroi d'appui 22 et dont l'autre extrémité 27 s'appuie sur une collerette 28 que présente une tige de support de ressort 29.

Cette tige de support 29 présente de part et d'autre de la collerette 28, un premier tronçon 30, à partir d'un premier côté de la collerette celui en direction de la cloison 22, en forme de tige 31 de diamètre inférieur au diamètre de la collerette 28 et dont l'extrémité libre 32 pénètre dans le volume intérieur du ressort 24 et à travers l'ouverture 23 que présente la paroi d'appui 22 ainsi qu'un deuxième tronçon 33, à partir d'un deuxième côté de la collerette en direction de l'extrémité 10 de la tête 2, également en forme de tige 34 de diamètre inférieur à la collerette, l'extrémité libre 35 de cette tige 34 se terminant par une barre 36 disposée orthogonalement à la tige 34, cette barre ayant une paroi circulaire de forme complémentaire aux première et deuxième parois de fond 15, 17 de la rainure inclinée 8 en prenant appui dans celle-ci.

Ainsi, en position de fonctionnement et tel que représenté à la figure 1, la tête d'entraînement 2 est entraînée en un mouvement de rotation alternatif par l'arbre d'entraînement 6, le carter 3 peut pivoter dans le logement transversal 7 par son axe de pivotement 21 alors que ledit carter dans son ensemble est rappelé élastiquement sur une surface à essuyer par le ressort de compression 24 dont les points d'application des forces sont, d'une part, pour le carter, sur la surface externe 26 de la paroi d'appui 22 et, d'autre part, pour la tête d'entraînement, au niveau de l'appui de la barre 36 dans la deuxième paroi de fond 17 de façon à créer une résultante de forces tendant à faire pivoter le bras 1 dans son ensemble vers la surface à essuyer.

Comme cela est représenté aux figures 3 et 4, le démontage du bras d'essuie-glace 1 et la séparation du carter 3 par rapport à la tête d'entraînement s'effectue de la manière suivante.

Dans un premier temps et comme cela est représenté sur la figure 3, le carter 3 et le bras dans son ensemble est amené par pivotement dans le sens antihoraire de son axe 21 dans le logement 7 à la position représentée sur cette figure.

Pour arriver à cette position, la barre 36 de la tige 29 a quitté la deuxième paroi de fond 17 et vient glisser, de par l'action du ressort 24 et lorsque le point d'application de la force exercée par le ressort sur la paroi 22 est situé au-dessus du point d'application de la force du ressort exercée par la barre 36 sur la tête 2, le long de la surface inclinée 13 de la rainure inclinée 8 jusqu'à ce que le point de contact entre la surface inclinée 13 et la barre 36 soit situé dans le plan P tel que précédemment défini.

Dans cette position la résultante des forces exercées par le ressort 29 est nulle et le bras est en équilibre instable.

En continuant le mouvement tel que défini précédemment, pour obtenir la position représentée à la figure 4, la barre 36 a continué de glisser sous l'action du ressort 24 jusqu'à passer en dessous du plan P précédemment défini pour arriver en contact avec la première paroi de fond 15 en étant immobilisée en translation dans celle-ci.

Dans cette position, le carter 3 est en quelque sorte adapté à pouvoir pivoter autour de l'appui du ressort 24 sur la surface externe 26 qui n'exerce plus aucune action et lors de ce mouvement l'axe de pivotement 21 peut quitter aisément le logement transversal 7 grâce à la disposition des surfaces inclinées 11, 12 et il suffit de soulever le bras 1 dans son ensemble vers le haut de la figure 4 pour que l'ouverture 23 de la paroi 22 glisse au-delà de l'extrémité 32 de la tige de support 29 de manière à désolidariser le bras avec la tige de support 29.

Ainsi, après démontage du carter, la tête d'entraînement 2 reste solidaire en rotation avec l'arbre 6 et il est possible alors de remonter facilement un autre carter de bras.

Le montage d'un carter tel que défini jusqu'à maintement se réalise de la manière inverse de celle décrite jusqu'à maintenant c'est-à-dire reprenant le processus opératoire montré aux figures 4, 3 et 1.

Il va de soi que de nombreuses variantes peuvent être introduites, notamment par substitution de moyens techniquement équivalents sans pour cela sortir du cadre de l'invention telle que définie par les revendications.

## Revendications

1. Essuie-glace, notamment pour véhicule automobile, comprenant un bras d'essuie-glace (1) et une tête d'entraînement (2), ledit bras comportant un carter (3) de section en forme de U inversé portant un axe pivotement (21) ledit axe de pivotement (21) étant apte à coopérer avec un logement (7) porté par la tête d'entraînement (2) entraînée en rotation alternative autour d'un axe (XX') que présente un alésage (5) porté par ladite tête, ledit logement (7) étant incliné par rapport à l'axe (XX') de l'alésage (5), ainsi qu'un organe élastique (4) dont l'une (25) des extrémités appuie sur le carter (3) et dont l'autre (27) des extrémités agit sur la tête d'entraînement (2) par l'intermédiaire d'une extrémité (35) d'une tige de support (29) de l'organe élastique (4) de manière à créer un couple tendant à faire pivoter le bras d'essuie-glace en direction d'une surface à essuyer, caractérisé en ce que la tête d'entraînement (2) présente une rainure inclinée (8) par rapport à l'axe (XX') de l'alésage (5) à l'intérieur de laquelle coulisse l'extrémité (35) de la tige de support (29) entre une position dite de verrouillage, lorsque le bras d'essuie-glace est appliqué en direction de la surface vitrée et une position dite de déverrouillage, lorsque le bras d'essuie-glace est écarté de ladite surface vitrée.

2. Essuie-glace selon la revendication 1, caractérisé en ce que la rainure inclinée (8) est de direction orthogonale à l'axe (XX') de l'alésage (5).

3. Essuie-glace selon l'une des revendications précédentes, caractérisé en ce que la rainure inclinée (8) présente une inclinaison formant un angle aigu avec l'axe (XX') de l'alésage (5).

4. Essuie-glace selon l'une des revendications précédentes, caractérisé en ce que la rainure inclinée (8) est prévue entre l'axe (XX') de rotation de la tête d'entraînement et l'axe de pivotement (21,7) du carter (3) sur la tête d'entraînement (2) du bras d'essuie-glace (1).

5. Essuie-glace selon l'une des revendications précédentes, caractérisé en ce que la rainure inclinée (8) présente une surface inclinée (13) se terminant par des parois de fond (15,17).

6. Essuie-glace selon l'une des revendications précédentes, caractérisé en ce que la rainure inclinée (8) présente une première paroi de fond (15) située en dessous d'un plan horizontal (P) passant par l'axe de pivotement (21,7) du carter (3) sur la tête (2).

7. Essuie-glace selon l'une des revendications précédentes, caractérisé en ce que la rainure inclinée (8) présente une deuxième paroi de fond (17) située au-dessus d'un plan horizontal (P) passant par l'axe de pivotement (21).

8. Essuie-glace selon l'une des revencations précédentes, caractérisé en ce que la position de déverrouillage est obtenue lorsque le point d'application de l'extrémité (35) de la tige support (29) est situé en dessous du plan (P).

9. Essuie-glace selon l'une des revendications précédentes, caractérisé en ce que la position de verrouillage est obtenue lorsque le point d'application de l'extrémité (35) de la tige support (29) est situé au-dessus du plan (P).

10. Essuie-glace selon l'une des revendications précédentes, caractérisé en ce que l'extrémité (35) de la tige support (29) présente une barre (36) orthogonale à la direction de ladite tige.

## Claims

1. A screen wiper, especially for a motor vehicle, comprising a screen wiper arm (1) and a driving head (2), the said arm including a shroud (3) having a cross section in the form of an inverted U carrying a pivot pin (21), the said pivot pin (21) being adapted to cooperate with a recess (7) carried by the driving head (2) which is driven in alternating rotation about an axis (XX') of a hole (5) carried by the said head, the said recess (7) being inclined with respect to the axis (XX') of the hole (5), together with a resilient member (4), one of the ends (25) of which bears on the shroud (3), with the other one (27) of its ends acting on the driving head (2) through one end (35) of a support rod (29) for the resilient member (4), in such a way as to set up a torque which tends to cause the screen wiper arm to pivot towards a swept surface, characterised in that the driving head (2) has a groove (8) inclined with respect to the axis (XX') of the hole (5), within which the end (35) of the support rod (29) slides between a locking position, when the screen wiper arm is applied towards the glazed surface, and an unlocking position when the screen wiper arm is spaced away from the said glazed surface.

2. A screen wiper according to Claim 1, characterised in that the inclined groove (8) is directed orthogonally to the axis (XX') of the hole (5).

3. A screen wiper according to one of the preceding Claims, characterised in that the inclined groove (8) has an inclination defining an acute angle with the axis (XX') of the hole (5).

4. A screen wiper according to one of the preceding Claims, characterised in that the inclined groove (8) is arranged between the axis (XX') of rotation of the driving head and the axis (21, 7) of pivoting of the shroud (3) on the driving head (2) of the screen wiper arm (1).

5. A screen wiper according to one of the preceding Claims, characterised in that the inclined groove (8) has an inclined surface (13) which terminates in base walls (15, 17).

6. A screen wiper according to one of the preceding Claims, characterised in that the inclined groove (8) has a first base wall (15) lying below a horizontal plane (P) passing through the axis (21, 7) of pivoting of the shroud (3) on the head (2).

7. A screen wiper according to one of the preceding Claims, characterised in that the inclined groove (8) has a second base wall (17) lying above a horizontal plane (P) passing through the pivot axis (21).

8. A screen wiper according to one of the preceding Claims, characterised in that the unlocking position is obtained when the point of application of the end (35) of the support rod (29) lies below the plane (P).

9. A screen wiper according to one of the preceding Claims, characterised in that the locking position is obtained when the point of application of the end (35) of the support rod (29) lies above the plane (P).

10. A screen wiper according to one of the preceding Claims, characterised in that the end (35) of the support rod (29) has a bar (36) orthogonal to the direction of the said rod.

## Patentansprüche

1. Scheibenwischer, insbesondere für Kraftfahrzeuge, bestehend aus einem Scheibenwischerarm (1) und einem Antriebskopf (2), wobei der Scheibenwischerarm ein Gehäuse (3) mit einem Querschnitt in umgekehrter U-Form umfaßt, an dem sich ein Schwenkbolzen (21) befindet, und dieser Schwenkbolzen (21) mit einer Aufnahme (7) zusammenwirken kann, die an dem Antriebskopf (2) angebracht ist, der in einer Pendeldrehbewegung um eine Achse (XX') angetrieben wird, die sich in einer an dem Antriebskopf vorgesehenen Bohrung (5) befindet, wobei die Aufnahme (7) im Verhältnis zur Achse (XX') der Bohrung (5) geneigt ist, sowie ein elastisches Organ (4), das mit einem (25) seiner Enden auf das Gehäuse (3) und mit dem anderen (27) seiner Enden über ein Ende (35) einer Tragstange (29) des elastischen Organs (4) auf den Antriebskopf (2) einwirkt, so daß ein Moment entsteht, um den Scheibenwischerarm in Richtung einer zu wischenden Fläche zu schwenken , **dadurch gekennzeichnet,** daß der Antriebskopf (2) eine im Verhältnis zur Achse (XX') der Bohrung (5) geneigte Schrägnut (8) aufweist, in deren Innern sich das Ende (35) der Tragstange (29) zwischen einer sogenannten Verriegelungsposition, wenn der Scheibenwischerarm in Richtung der Glasfläche angedrückt wird, und einer sogenannten Freigabeposition verschiebt, wenn der Scheibenwischerarm von der Glasfläche abgeklappt wird.

2. Scheibenwischer nach Anspruch 1 , **dadurch gekennzeichnet,** daß die Schrägnut (8) rechtwinklig zur Achse (XX') der Bohrung (5) verläuft.

3. Scheibenwischer nach einem der vorangehenden Ansprüche , **dadurch gekennzeichnet,** daß die Schrägnut (8) eine Neigung aufweist, die einen spitzen Winkel mit der Achse (XX') der Bohrung (5) bildet.

4. Scheibenwischer nach einem der vorangehenden Ansprüche , **dadurch gekennzeichnet**, daß die Schrägnut (8) zwischen der Drehachse (XX') des Antriebskopfs und der Schwenkachse (21, 7) des Gehäuses (3) am Antriebskopf (2) des Scheibenwischerarms (1) angeordnet ist.

5. Scheibenwischer nach einem der vorangehenden Ansprüche , **dadurch gekennzeichnet**, daß die Schrägnut (8) eine geneigte Fläche (13) aufweist, die in Bodenwänden (15, 17) endet.

6. Scheibenwischer nach einem der vorangehenden Ansprüche , **dadurch gekennzeichnet**, daß die Schrägnut (8) eine erste Bodenwand (15) aufweist, die sich unterhalb einer horizontalen Ebene (P) befindet, die durch den Schwenkbolzen (21, 7) des Gehäuses (3) am Antriebskopf (2) verläuft.

7. Scheibenwischer nach einem der vorangehenden Ansprüche , **dadurch gekennzeichnet**, daß die Schrägnut (8) eine zweite Bodenwand (17) aufweist, die sich oberhalb einer horizontalen Ebene (P) befindet, die durch den Schwenkbolzen (21) verläuft.

8. Scheibenwischer nach einem der vorangehenden Ansprüche **, dadurch gekennzeichnet**, daß die Freigabeposition erreicht wird, wenn sich der Angriffspunkt des Endes (35) der Tragstange (29) unterhalb der Ebene (P) befindet.

9. Scheibenwischer nach einem der vorangehenden Ansprüche , **dadurch gekennzeichnet**, daß die Verriegelungsposition erreicht wird, wenn sich der Angriffspunkt des Endes (35) der Tragstange (29) oberhalb der Ebene (P) befindet.

10. Scheibenwischer nach einem der vorangehenden Ansprüche , **dadurch gekennzeichnet**, daß das Ende (35) der Tragstange (29) einen rechtwinklig zur Richtung der Tragstange angeordneten Stab (36) aufweist.
